# EUROPEAN PATENT APPLICATION

(11) **EP 4 597 244 A1**
(43) Date of publication of application: **06.08.2025**
(21) Application number: 24155614.1
(22) Date of filing: 02.02.2024
(51) Int. Cl.: G05B 19/418, G05B 19/042, G05B 23/02

(54) **A COMPUTER-IMPLEMENTED METHOD FOR PROVIDING DIAGNOSTIC DATA OF A COMPONENT**

(71) Applicant: ABB SCHWEIZ AG, 5400 Baden (CH)
(72) Inventor: KOZIOLEK, Heiko, 76227 Karlsruhe (DE); SAHLAB, Nada, 70563 Stuttgart (DE); TROSTEN, Anders, 724 76 Västerås (SE)
(74) Representative: Maiwald GmbH

(57) **Abstract**

The invention relates to a computer-implemented method for providing diagnostic data (240.1) of a component (200.1) in an industrial plant, the component (200.1) comprising an OPC UA server (202.1). The method comprises the steps of:
providing, on the OPC UA server (202.1), diagnostic metadata, which describe the diagnostic data (240.1) of the component (200.1);
discovering, by a diagnostic unit (110), the OPC UA server (202.1) of the component (200. 1);
creating, by the diagnostic unit (110), a corresponding data collection unit (120.1) for the component (200.1), the data collection unit (120.1) comprising an OPC UA client (122.1);
generating, by the diagnostic unit (110), a configuration file (122.1) for the data collection unit (120.1), by using the diagnostic metadata;
transferring, by the diagnostic unit (110), the configuration file to the data collection unit (120.1);
modifying, by the diagnostic unit (110), a configuration file (320) of the time-series database (300) by adding a URI of the data collection unit (120.1);
connecting, by the data collection unit (120.1), to the time-series database (300);
delivering diagnostic data (240.1) of the component (200.1), via the data collection unit (120.1), to the time-series database (300); and
storing the diagnostic data (240.1) of the component (200.1) to a diagnostic data repository (340) of the time-series database (300).

## Description

### Field of the Invention

The invention relates to a computer-implemented method for providing diagnostic data of a component in an industrial plant. The invention further relates to a diagnostics unit, to a use, to a program element, and to a computer-readable storage medium.

### Background

An industrial plant may comprise a plethora of components, e.g. components like sensors or actuators, and/or one or more control units. Thus, not only a lot of measurement data may be produced by the components, but also a lot of diagnostic data, such as information on processor and/or communication loads, security issues, error and event logs, and/or many others. At least for some plants, particularly for those with distributed control systems, this information may be useful, e.g. for planning and/or for dimensioning the components. For handling the data, storing the diagnostic data in a database would be supportive. However, setting up a collecting of diagnostic and/or monitoring data in an adequate database - particularly for a distributed control system - may require substantial manual configuration efforts and may be error-prone and costly. Hence, reducing time and effort for setting up the collecting of diagnostic and/or monitoring data would be desirable.

### Description

It is an objective of the disclosure to provide a method for setting up a collecting of diagnostic and/or monitoring data of the plant's components. This objective is achieved by the subject-matter of the independent claims. Further embodiments are evident from the dependent claims and the following description.

One aspect relates to a computer-implemented method for providing diagnostic data of a component in an industrial plant, the component comprising an OPC UA server, the method comprising the steps of:
[502] providing, on the OPC UA server, diagnostic metadata, which describe the diagnostic data of the component;
[504] discovering, by a diagnostic unit, the OPC UA server of the component;
[506] creating, by the diagnostic unit, a corresponding data collection unit for the component, the data collection unit comprising an OPC UA client;
[508] generating, by the diagnostic unit, a configuration file for the data collection unit, by using the diagnostic metadata;
[510] transferring, by the diagnostic unit, the configuration file to the data collection unit;
[512] modifying, by the diagnostic unit, a configuration file of the time-series database by adding a URI of the data collection unit;
[514] connecting, by the data collection unit, to the time-series database;
[516] delivering diagnostic data of the component, via the data collection unit, to the time-series database; and
[518] storing the diagnostic data of the component to a diagnostic data repository of the time-series database.

The industrial plant may be configured for producing and/or for manufacturing substances, for instance materials and/or compounds. The industrial plant may comprise one or more sub-systems. Each sub-system may comprise components, e.g. components like sensors and/or actuators, and/or control units. Examples for sensors may comprise inductive, capacitive, resistive, and/or optical means, which may be configured, e.g., for sensing pressure, flow, temperature, distance, and/or variations of these measures, e.g. speed, acceleration, etc. Examples for actuators may comprise pumps, compressors, vessels or pressure vessels, tanks, heat exchangers, furnaces, fans, cooling towers, valves, etc. Examples for control units may comprise one or more Programmable Logic Controllers, PLCs.

It may be efficient to store the diagnostic data in a so-called time-series database, because such databases are well optimized for such a type of data, i.e. usually a huge amount of data that are produced on a more or less regular base. Essential for a time-series database may comprise databases like as InfluxDB, Prometheus, TimeScaleDB, and/or other names or trademarks for time-series databases. Unfortunately, these time-series databases in most cases originate from IT-related domains and are, thus, usually not very well suited to communicate with protocols coming of a production and/or manufacturing domain. As a result, a communication between the plant's components and the time-series database may usually require many manual steps. This approach, however, makes use of the fact that newer components of industrial plants support OPC UA (Open Platform Communications, OPC, Unified Architecture) protocols and outlines a strategy for an automated configuration of the communication path between the components and the time-series database.

Particularly, the components may comprise an OPC UA server. For instance, when a communication path from a temperature sensor is to be established, an OPC UA server may be deployed on a Kubernetes worker node for reading temperature values from said sensor. Then, diagnostic metadata, which describe the diagnostic data of the component, may be provided on the OPC UA server. The metadata have the purpose to identify diagnostic data, which can be queried by an OPC UA client, e.g. by executing OPC UA browse commands. This metadata may, for example, be defined according to one of the OPC UA Companion Specifications, e.g.:
- OPC 10000-5: UA Part 5: Information Model, https://reference.opcfoundation.org/Core/Part5/v104/docs/12.9, or
- OPC 10000-100: Devices
   https://reference.opcfoundation.org/DI/v104/docs/4.5.4
   https://reference.opcfoundation.org/DI/v104/docs/4.12

An example of a metadata file (in XML), which specifies a bunch of (simple) diagnostic data of interest, may look like this:

```
       <UAObject NodeId="ns=1;i=5003" BrowseName="1:MonitoringData">
               <DisplayName>MonitoringData</DisplayName>
               <References>
                      <Reference
       ReferenceType="HasTypeDefinition">i=61</Reference>
                      <Reference
       ReferenceType="Organizes">ns=1;i=5006</Reference>
        ... </UAObject>
       <UAObject SymbolicName="BaseObject" NodeId="ns=1;i=5006"
       BrowseName="1:CPU Usage">
               <DisplayName>CPU Usage</DisplayName>
               <Description>Monitoring Item</Description>
               <References> ... </References>
       </UAObject>
       <UAVariable DataType="String" ParentNodeId="ns=1;i=5001"
       NodeId="ns=1;i=6003" BrowseName="NamespaceUri">
               <DisplayName>NamespaceUri</DisplayName>
               <References> ... </References>
               <Value>
               <uax:String>http://yourURI.org/Testl/</uax:String>
               </Value>
       </UAVariable>
       <UAVariable DataType="IdType" ParentNodeId="ns=1;i=5001"
       ValueRank="1" NodeId="ns=1;i=6005" ArrayDimensions="0"
       BrowseName="StaticNodeIdTypes">
               <DisplayName>StaticNodeIdTypes</DisplayName>
               <References> ... </References>
       </UAVariable>
```

From this example, it is clearly visible how - for instance - a structure of a metadata file may look like, how diagnostic data of interest are defined and/or how links (URIs) to other entities may be defined. In the example shown above, an OPC UA address space may look like this:

```
       Folder: "MonitoringData"
       MonitoringItem: "CPU Usage"
       MonitoringItem: "Interactions per second" (not shown above)
       MonitoringItem: "Mem Usage" (not shown above)
```

A diagnostic unit may, then, discover the OPC UA server of the component. This may be done on a regular base, e.g. once per day, once per shift, etc. Additionally or as an alternative, this may be done on a deployment of a new component into the industrial plant or the sub-system of interest, by this means implementing an automated discovery of the component's OPC UA server for retrieving its diagnostics data. This discovery process for new OPC UA servers may utilize OPC UA local or global discovery services, e.g. using a Multicast DNS message (mDNS). As an example, the OPC UA server may announce its presence in the Kubernetes cluster using an mDNS, which is received by the diagnostic unit, which is configured for listening to such messages. The diagnostic unit may comprise an OPC UA client; this may, e.g., be implemented with an Open62531 OPC UA SDK.

Then, the diagnostic unit, may create a corresponding data collection unit for the component. For instance, for a component "Field Device #1", a data collection unit "Diagnostics Collector #1" may be created. The data collection unit may comprise an OPC UA client for communicating to the corresponding OPC UA server of the component. The creating may comprise to generate, install, and to start a corresponding data collection unit for each newly found OPC UA server. In other words, upon discovering a new OPC UA server, the diagnostic unit may connect to the component's OPC UA server using the newly created OPC UA client. The connecting may include a proper authentication and authorization procedure.

The creating may be implemented, e.g., by creating a configuration file for each data collection unit, the configuration file including the specific OPC UA endpoint and the memorized OPC UA server node addresses. The server node addresses may be contained in the configuration file. Then, OPC UA browse commands may be executed to navigate to the metadata for diagnostics data and to reads the node IDs for each node - i.e. effectively for each OPC UA server - of the components. With the list of node IDs, the diagnostic unit may then generate a configuration file for the data collection unit containing the endpoint URL, i.e. the address of the OPC UA server, as well as the list of node IDs. The diagnostic metadata may be used, e.g. for generating said configuration file for the data collection unit. This may comprise browsing to all node IDs of the OPC UA servers, collect their addresses and include them in the configuration file that specifies which nodes are subscribed for updates. An "update" may refer to getting a new value for a node. For instance, if the diagnostics data of a node refers to the number of logged in OPC UA clients, then according to a predefined subscription rate (e.g., 1000 ms), the current value of this node may be requested (e.g., to detect that now 5 instead of 4 clients are connected to the server). The diagnostic unit may, then, transfer the configuration file to the data collection unit, or respectively to each one of the data collection units.

Afterwards - or, in a variation, in parallel to at least one of the foregoing steps - the configuration file of the "scraper" of the time-series database (time-series DB scraper) needs to be modified. For this, at least a URI of the data collection unit (also called "OPC UA exporter" for this purpose) is added to said configuration file, e.g. to a Kubernetes ConfigMap of the time-series database. The URI of the data collection unit may, e.g., be REST (Representational State Transfer) endpoint. In other words, the reconfiguration of a time-series DB scraper - to include new component's OPC UA server - is, thus, done on reaction on adding a new component. Note that this step may be executed at runtime when all components are already running. Note further that the scraper's reconfiguration may not require a restart of the time-series database.

An example of a configuration file of the "scraper" of the time-series database may look like this, e.g. written in YAML (Yet Another Markup Language):

```
       apiVersion: monitoring.coreos.com/vl
       kind: Prometheus
       metadata:
       name: prometheus
       labels:
       prometheus: prometheus
       spec:
       replicas: 2
       serviceAccountName: prometheus
       serviceMonitorSelector:
       matchLabels:
       team: frontend
       additionalScrapeConfigs:
       name: additional-scrape-configs
       key: prometheus-additional.yaml
```

The data collection unit may, then, be ready for connecting to the time-series database. In an implementation, the OPC UA exporter may be started as a container by Kubernetes. Upon its start-up, the OPC UA exporter may immediately try to connect to the configured OPC UA endpoint, e.g. the component's OPC UA server. with its included OPC UA client. A single OPC UA server may expose several endpoints on different ports, exposing different parts of the address space. By connecting to the endpoint, a connection to the OPC UA server is established. The time-series database has a "custom scraper" (the time-series DB scraper) that can read via the REST interface of the OPC UA exporter, but not directly OPC UA servers.

After executing the previous steps, diagnostic data of the component may be delivered, via the data collection unit or the OPC UA exporter, to the time-series database. For instance, the data collection unit "Diagnostics Collector #1" may get diagnostic data of the component "Field Device #1", e.g., every 10 seconds. It exposes the data on a REST endpoint, where the periodically running time-series DB scraper can fetch the data. The diagnostic data of the component can then be stored to a diagnostic data repository of the time-series database. The diagnostic data repository of the time-series database may be a basis for further processing and/or otherwise using the data. The diagnostic data repository may have some optimizations for fast accessing the data, e.g. it may create indexes for fast querying.

By using this method, setting up a collecting of diagnostic and/or monitoring data of the plant's components may be performed in an automated way. The method is able is to make the diagnostic data of the component's OPC UA server available to a time-series database that does not know about the OPC UA communication standard. This does not only reduce the effort for connecting and/or transferring the component's diagnostic data to a database significantly, but makes this connection correct by definition, thereby avoiding potential configuration errors, particularly in a system as complex as an industrial plant. Moreover, advantageously only the OPC UA client of the diagnostic unit needs to be modified, but the OPC UA servers on the components can be kept unchanged, i.e. no modifications become necessary.

In various embodiments, the method, further comprising the step of: Processing the data of the diagnostic data repository, wherein processing the data comprises at least one of:
- Displaying the data by a visualization unit. The displayed data may, e.g., be analysed for outliers and anomalies. Multiple time-series can be compared and common incidents and anomalies can be detected, which support root cause analysis for failures.
- Outputting an alarm when at least one of the data of the diagnostic data repository exceeds a predefined threshold. The outputting may, e.g., comprise to send a message to a control centre. Or, in addition to displaying the data, alerting functions may be attached to the data displays, so that users are notified in case of severe threshold violations. This may be connected to alarming functions attached to the data, to notify a user of anomalies.
- Correlating the data of the diagnostic data repository with data of a measurement data repository. This may, e.g., be used for a root cause analysis in case of failures, or used for optimizing the system and/or its components, e.g. by knowing typical an maximum loads, e.g. of processors or communication paths.
- Storing significant correlations in a further database. The significant correlations may be determined by a post-processing ANN, which may be trained to recognize what correlations should by considered as significant.

In various embodiments, at least some steps of the method are performed when a new component is added to an industrial sub-system.

In various embodiments, the diagnostic data comprise at least one of:
- Server Diagnostics. This may comprise:
   - Server Status: Information about the current status of the server, including startup time, current time, and state (running, halted, etc.).
   - Server Capabilities: Details on the server's capabilities, such as supported protocols and data types.
   - Session Diagnostics: Information on current and past client sessions, including session IDs, client details, and session duration.
   - Subscription Diagnostics: Details on data subscriptions, including subscription IDs, monitored items, and update rates.
   - Session Security Diagnostics: Information on the security settings for each session, including encryption and authentication details.
- Communication Diagnostics. This may comprise:
   - Network Stats: Information on network usage, including bandwidth, error rates, and packet loss.
   - Transport Diagnostics: Details on the transport protocols used for communication, including any errors or issues.
   - Message Counts: Count of messages sent and received, categorized by message type.
   - Security Token Diagnostics: Information on the security tokens used for session authentication and encryption.
- Performance Diagnostics. This may comprise:
   - CPU Usage: Percentage of CPU usage by the OPC UA server.
   - Memory Usage: Amount of memory used by the server.
   - Thread Counts: Number of threads in use by the server.
   - Latency Stats: Latency information for read/write operations and data updates.
- Data Diagnostics. This may comprise:
   - Variable Diagnostics: Information on the server's variables, including data type, value, and quality.
   - Data Change Counts: Count of data changes for monitored variables.
   - Event Counts: Count of events triggered and processed by the server.
- Security Diagnostics. This may comprise:
   - Security Audit Logs: Logs of security-related events, such as login attempts, configuration changes, and security token issues.
   - Active Sessions: List of currently active sessions, including their security settings.
   - Rejected Session Counts: Count of session creation attempts that were rejected due to security policies.
- Error and Event Logs. This may comprise:
   - System Errors: Logs of system-level errors and exceptions.
   - Application Errors: Logs of application-level errors and exceptions.
   - Audit Events: Logs of significant events and operations for audit purposes.
- Diagnostics data for a control logic execution engine:

In various embodiments, the metadata comprises an address space folder with a predefined name, an address space with a predefined name, and/or a dedicated OPC UA endpoint on the OPC UA server. Examples for the address space folder with a predefined name may comprise specially named address space folders (e.g., "Device Health", "Server Diagnostics"). Examples for the address space with a predefined name may comprise specially named address space nodes (e.g., prefixed with "diag" or suffixed with "health"). The dedicated OPC UA endpoint on the OPC UA server may be used exclusively for diagnostics data. As an example, a specifically named folder "Diagnostic Metrics" could be used as diagnostic metadata. Then the configuration file would be generated containing all the node IDs in this folder (also recursively in subfolders).

In various embodiments, the generating the corresponding data collection unit is performed by creating a configuration file that includes the specific OPC UA endpoint of the data collection unit and the node address of the data collection unit. Additionally or as an alternative, there may be other means to provide the endpoint, e.g. a command line parameter. The configuration file may be written in YAML (Yet Another Markup Language), and may look like this:

```
       - nodeName: ns=1;s=Voltmeter
       metricName: circuit_input_volts
       - nodeName: ns=1;s=Ampmeter
       metricName: circuit_input_amps
       - nodeName: ns=1;s=CircuitBreakerStates
       extractBit: 3 # means: pull just bit 3 from a bit-vector channel
       metricName: circuit_breaker_three_tripped
```

The expression "nodeName" may define the OPC UA Node ID, "ns=1" may define the OPC UA Namespace ID, i.e. "namespace = 1", "s=Voltmeter" may be an example for an identifier for a node in an address space of an OPC UA Server. The expression "metricName" may be a metric name in a time-series DB, "circuit_input_volts" may be a string generated as a metric name for this Node ID, according to the constraints of the time-series DB for metric names.

In various embodiments, the OPC UA endpoint of the data collection unit is a REST (Representational State Transfer) endpoint and/or a SOAP (Simple Object Access Protocol) endpoint.

In various embodiments, transferring the configuration file to the data collection unit is performed by a sidecar-injection into a Kubernetes pod, the sidecar-injection modifying the pod configuration of the OPC UA server of the component. The so-called sidecar-injection may modify the pod configuration of the OPC UA server by a query to the kubeapi server at port 6443. In particular, it may add to the pod configuration another container, in this case an instance of the open-strateos OPC UA exporter packaged as a Docker container, and configured according to the previously created configuration file. This sidecar container serves as a data collection unit, e.g. "Diagnostics Collector #1" in an example scenario. Once the configuration is saved, Kubernetes may start the OPC UA exporter container.

In various embodiments, delivering diagnostic data is done on demand or periodically. The time-intervals for sending the data may be configurable. As an example, the open-strateos/opcua_exporter has a command line parameter called "-summary-interval" for this purpose. Furthermore, also the scraping intervals of the time-series database are configurable, for instance "scraping_interval" for the Prometheus database. The time-intervals may be one of: 1 s (second), 2 s, 5 s, 10 s, 60 s, and/or other time-intervals. Using OPC UA, an on-demand sending is normally not possible, since the OPC UA client registers at an OPC UA server a session with an update rate per subscribed item. However, it is possible to set a short update rate that oversamples the actual values coming from the server, which then get perceived as a "virtual" on-demand sending for the user, because the time-interval for updates is so short.

In some embodiments, the Diagnostic Collector may need to perform a mapping of the OPC UA address space node names to the naming format supported by the time-series database. For example, some time-series databases do not support blanks or special characters in their metrics names, which may be allowed in OPC UA. Furthermore, the diagnostic unit may prefix the metrics names with a unique identifier, so that diagnostic data of multiple OPC UA servers with equal address space structures can be integrated into the time-series database and still be uniquely identified.

In various embodiments, the component is a sensor, an actuator, and/or a control unit. In at least some plants, also a Programmable Logic Controller (PLC) may act as a component and/or a sub-system.

An aspect relates to a diagnostics unit configured for providing, collecting, storing and/or analysing diagnostic data of a plurality of components according to any one of the preceding claims.

An aspect relates to a use of a diagnostics unit described above and/or below for collecting, storing and/or diagnostic data of a plurality of components, for supporting a fault analysis of an industrial sub-system, for predicting a maintenance of at least one of the components and/or for an optimization of a logging strategy of the diagnostics data.

An aspect relates to a computer program product comprising instructions, which, when is executed by a computer and/or a controller in diagnostics unit as described above and/or below, cause the computer and/or controller to carry out the method described above and/or below.

An aspect relates to a computer-readable storage medium where a computer program or a computer program product as described above is stored on.

For further elucidation, the disclosure is described by means of embodiments shown in the figures. These embodiments are to be considered as examples only, but not as limiting.

### Brief Description of the Drawings

The drawings depict:
- **Fig. 1**: schematically a scenario for performing a method according to an embodiment in an industrial plant;
- **Fig. 2**: a flow diagram according to an embodiment;
- **Fig. 3**: schematically an example for a deployment of the system parts to containers and pods;
- **Fig. 4**: schematically a high-level view of a Kubernetes cluster according to an embodiment;
- **Fig. 5**: schematically an example of a visualization.

### Detailed Description of Embodiments

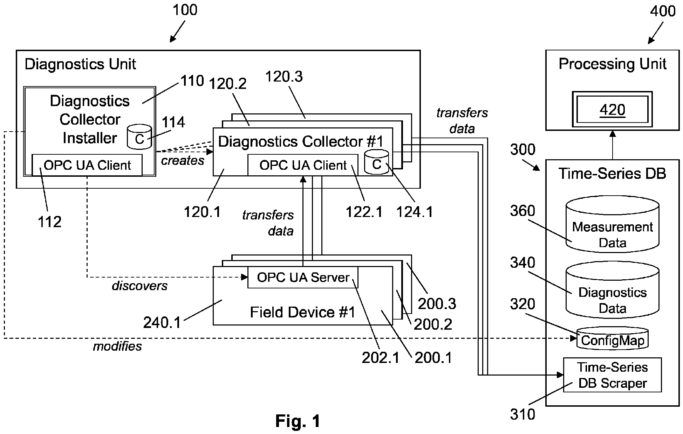

**Fig. 1** shows schematically a scenario for performing a method according to an embodiment in an industrial plant. The industrial plant comprises at least a plurality of components 200.1. 200.2, 200.3. The components 200.1. 200.2, 200.3 may be one or more sensor(s), actuator(s), and/or control unit(s). As an example, the component 200.1 is a temperature sensor, called "Field Device #1". Each one of the components 200.1. 200.2, 200.3 has a respective OPC UA Server 202.1. 202.2, 202.3. Each one of the components 200.1. 200.2, 200.3 may deliver diagnostic data 240.1, 240.2, 240.3.

The scenario further comprises a diagnostics unit 100. The diagnostics unit 100 may comprise a diagnostics collector installer 110. The diagnostics collector installer 110 may comprise a processor, a memory, etc. (not shown) configured for performing at least a part of the method described above and/or below. The diagnostics unit 100 may also comprise a plurality of data collection units, e.g. "Diagnostics Collector #1" 120.1, "Diagnostics Collector #2" 120.2, "Diagnostics Collector #3" 120.3, and/or further ones. The data collection units comprise respective OPC UA Clients 122.1. 122.2, 122.3, and respective configuration files 124.1. 124.2, 124.3.

Furthermore, the scenario comprises a time-series database 300. The time-series database 300 has a diagnostic data repository 340 and, at least optionally, a measurement data repository 360. The time-series database 300 has further a "scraper" of the time-series database (time-series DB scraper 310), which may serve as an entry point for data to be stored in one of the repositories 340, 360. The time-series DB scraper 310 may be configured by a configuration file (ConfigMap 320). The date of diagnostic data repository 340 may be further processed by a processing unit 400, which may comprise a visualisation unit 420.

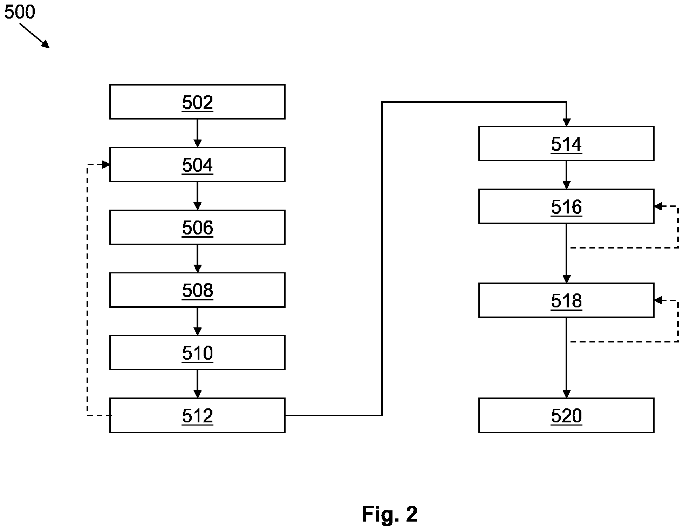

**Fig. 2** shows a flow diagram 500 according to an embodiment, which depict how the entities of **Fig. 1** may interact. The flow diagram 500 sketches a computer-implemented method for providing diagnostic data 240.1 of a component 200.1 in an industrial plant, the component 200.1 comprising an OPC UA server 202.1. In a step 502, diagnostic metadata are provided on the OPC UA server 202.1 of the component 200.1. The diagnostic metadata describe the diagnostic data 240.1 of the component 200.1. In a step 504, the OPC UA server 202.1 of the component 200.1 is discovered by a diagnostic unit 110, e.g. by using mDNS (Multicast DNS message). In a step 506, a corresponding data collection unit 120.1 for the component 200.1 is created by the diagnostic unit 110. The data collection unit 120.1 comprises an OPC UA client 122.1. In a step 508, a configuration file 122.1 for the data collection unit 120.1 is generated by the diagnostic unit 110. The generating is performed by using the diagnostic metadata. In a step 510, the configuration file 124.1 is transferred, by the diagnostic unit 110, to the data collection unit 120.1. In a step 512, , a configuration file 320 of the time-series database 300 is modified, by the diagnostic unit 110, by adding a URI of the data collection unit 120.1. On inserting a new component 200.x into the plant (and/or triggered by another event), the steps 504 - 512 may be repeated. In a step 514, the data collection unit 120.1 connects to the time-series database 300. In a step 516, diagnostic data 240.1 of the component 200.1 are delivered, via the data collection unit 120.1, to the time-series database 300. In a step 518, the diagnostic data 240.1 of the component 200.1 is stored to a diagnostic data repository 340 of the time-series database 300. In an optional step 520, the data of the diagnostic data repository 340 are processed, e.g. visualized.

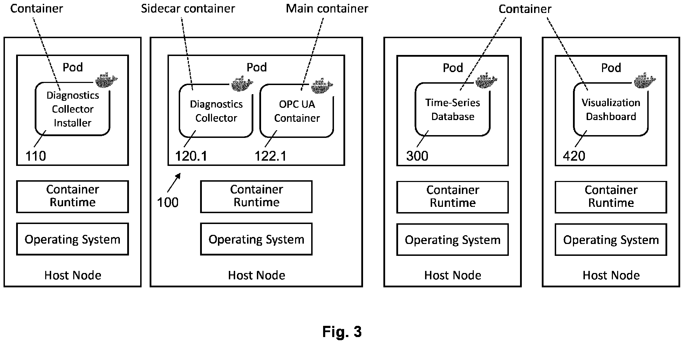

**Fig. 3** shows schematically an example for a deployment of the system parts to containers and pods. **Fig. 3** shows several host nodes, for each one of the participating entities, like the diagnostics unit, the time-series database, and others. All host nodes have an operating system (e.g. Linux Ubuntu) running on it. On top, a container runtime is installed, i.e. a kind of middleware (sometimes called "orchestrator") as a basis for the containers. The program parts that are specific for said entities each run in a so-called "Pod", i.e. a K8s pod. Particularly, the diagnostics unit 100 comprises two containers: the "OPC UA Container" 122.1 and the "Diagnostics Collector" 120.1. The "Diagnostics Collector" 120.1 is implemented as a sidecar to the "OPC UA Container" or as a "sidecar-injection into a Kubernetes pod". Said sidecar-injection may modify the pod configuration of the OPC UA server of the component. The implementation as sidecar has the benefit that it is a quite small program part, thus advantageously needing only a small amount of memory. In addition, the sidecar is easy and fast to install.

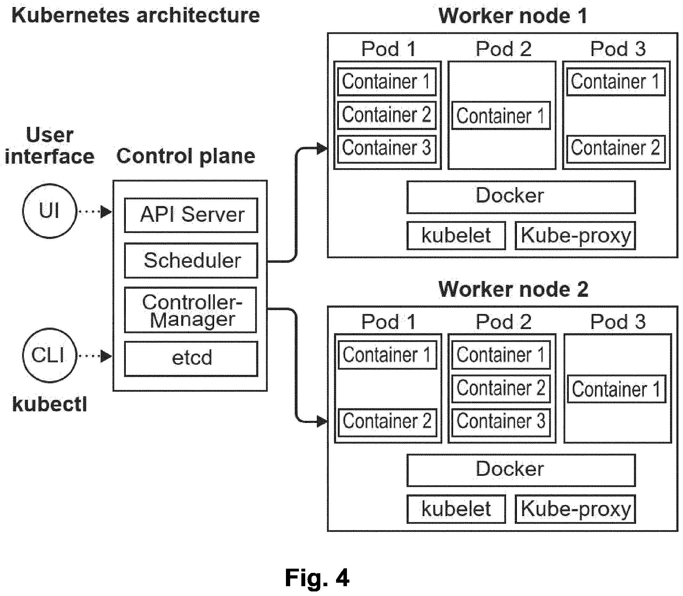

**Fig. 4** shows schematically a high-level view of a Kubernetes cluster according to an embodiment. For setting up a Kubernetes cluster, three Linux machines (one as control plane node, two as worker nodes) are set up by installing the Ubuntu operating system as well as an SSH-sever for remote access. All machines are connected via a network and reside in the same subnet, so that they can communicate to each other via TCP/IP.

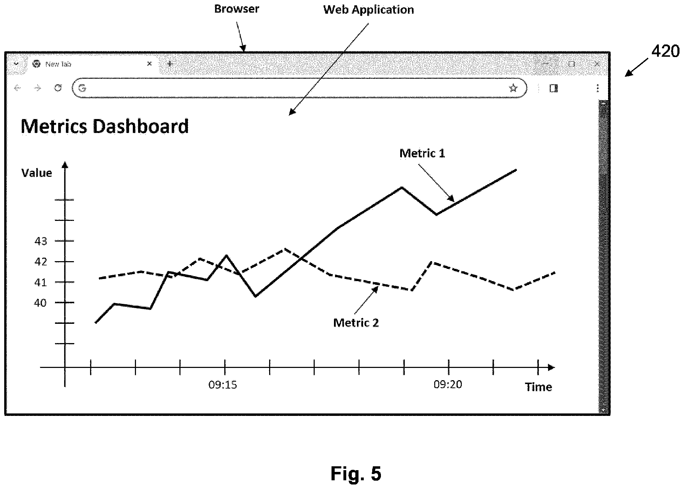

**Fig. 5** shows schematically an example of a visualization. The straight line labelled "Metric1" represents one metric value over time (e.g., here for about 30 minutes). In this illustration, it may represent a diagnostic value, for example a CPU utilization of a server node or a number of logins to an OPC UA server. The broken line labelled "Metric2" may represent another metric value. The side-by-side visualization with the straight line may be used by an expert for finding correlations in two diagnostics data lines.

### List of Reference Symbols

- 100: diagnostics unit
- 110: diagnostics collector installer
- 114: configuration file
- 120.1: data collection unit
- 122.1: OPC UA client of the data collection unit
- 124.1: configuration file of the data collection unit
- 200.i: component
- 202.1: OPC UA server of the component
- 240.i: diagnostic data of the component
- 300: time-series database
- 310: time-series database scraper
- 320: configuration file ConfigMap
- 340: diagnostic data repository
- 360: measurement data repository
- 400: processing unit
- 420: visualisation unit
- 500: flow diagram
- 502 - 520: steps

## Claims

1. A computer-implemented method for providing diagnostic data (240.1) of a component (200.1) in an industrial plant, the component (200.1) comprising an OPC UA server (202.1), the method comprising the steps of:
providing, on the OPC UA server (202.1), diagnostic metadata, which describe the diagnostic data (240.1) of the component (200.1);
discovering, by a diagnostic unit (110), the OPC UA server (202.1) of the component (200.1);
creating, by the diagnostic unit (110), a corresponding data collection unit (120.1) for the component (200.1), the data collection unit (120.1) comprising an OPC UA client (122.1);
generating, by the diagnostic unit (110), a configuration file (122.1) for the data collection unit (120.1), by using the diagnostic metadata;
transferring, by the diagnostic unit (110), the configuration file to the data collection unit (120.1);
modifying, by the diagnostic unit (110), a configuration file (320) of the time-series database (300) by adding a URI of the data collection unit (120.1);
connecting, by the data collection unit (120.1), to the time-series database (300);
delivering diagnostic data (240.1) of the component (200.1), via the data collection unit (120.1), to the time-series database (300); and
storing the diagnostic data (240.1) of the component (200.1) to a diagnostic data repository (340) of the time-series database (300).

2. The method of claim 1, further comprising the step of:
processing the data of the diagnostic data repository (340), wherein processing the data comprises at least one of:
displaying the data by a visualization unit (400),
outputting an alarm when at least one of the data of the diagnostic data repository (340) exceeds a predefined threshold;
correlating the data of the diagnostic data repository (340) with data of a measurement data repository (360); and/or
storing significant correlations in a further database.

3. The method of claim 1 or 2,
wherein at least some steps of the method are performed when a new component (200.1) is added to an industrial sub-system.

4. The method of any one of the preceding claims,
wherein the diagnostic data comprise at least one of:
server diagnostics data;
communication diagnostics data;
performance diagnostics data;
diagnostics data details;
security diagnostics data;
data from error and event logs; and/or
diagnostics data for a control logic execution engine;

5. The method of any one of the preceding claims,
wherein the metadata comprises an address space folder with a predefined name, an address space with a predefined name, and/or a dedicated OPC UA endpoint on the OPC UA server.

6. The method of any one of the preceding claims,
wherein generating the corresponding data collection unit (120.1) is performed by creating a configuration file (114) that includes the specific OPC UA endpoint of the data collection unit (120.1) and the node address of the data collection unit (120.1).

7. The method of claim 6,
wherein the OPC UA endpoint of the data collection unit (120.1) is a REST endpoint and/or a SOAP endpoint.

8. The method of any one of the preceding claims,
wherein transferring the configuration file to the data collection unit (120.1) is performed by a sidecar-injection into a Kubernetes pod, the sidecar-injection modifying the pod configuration of the OPC UA server (202.1) of the component (200.1).

9. The method of any one of the preceding claims,
wherein delivering diagnostic data (240.1) is done on demand or periodically.

10. The method of any one of the preceding claims,
wherein the component (200.1) is a sensor or an actuator.

11. A diagnostics unit (100) configured for providing, collecting, storing and/or analysing diagnostic data (240.1, 240.2) of a plurality of components (200.1, 200.2) according to any one of the preceding claims.

12. Use of a diagnostics unit (100) according to claim 11 for collecting, storing and/or diagnostic data (240.1, 240.2) of a plurality of components (200.1, 200.2), for supporting a fault analysis of an industrial sub-system, for predicting a maintenance of at least one of the components (200.1, 200.2) and/or for an optimization of a logging strategy of the diagnostics data.

13. A computer program product comprising instructions, which, when is executed by a computer and/or a controller in a diagnostics unit (100) according to claim 11, cause the computer and/or controller to carry out the method according to any one of the claims 1 - 10.

14. A computer-readable storage medium on which the computer program product according to claim 13 is stored.
